(19) Europäisches Patentamt
European Patent Office
Office européen des brevets

(11) EP 2 671 929 A1

(12) **EUROPEAN PATENT APPLICATION**
published in accordance with Art. 153(4) EPC

(43) Date of publication:
**11.12.2013 Bulletin 2013/50**

(21) Application number: **12742723.5**

(22) Date of filing: **30.01.2012**

(51) Int Cl.:
***C09D 201/02*** (2006.01)
***B32B 27/00*** (2006.01)
***C09D 5/33*** (2006.01)
***C09D 7/12*** (2006.01)
***C09D 181/00*** (2006.01)

(86) International application number:
**PCT/JP2012/000557**

(87) International publication number:
**WO 2012/105213 (09.08.2012 Gazette 2012/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2011 JP 2011021554**
**26.08.2011 JP 2011185089**

(71) Applicant: **Nagase ChemteX Corporation**
**Osaka-shi, Osaka 550-8668 (JP)**

(72) Inventors:
- **MIYANISHI, Kyoko**
  **Hyogo 679-4124 (JP)**
- **FUJITA, Takafumi**
  **Hyogo 679-4124 (JP)**
- **HOSOMI, Tetsuya**
  **Hyogo 679-4124 (JP)**

(74) Representative: **Dantz, Jan Henning et al**
**Am Zwinger 2**
**33602 Bielefeld (DE)**

(54) **INFRARED-REFLECTING SUBSTRATE**

(57) Disclosed herein is an infrared reflective substrate that can be easily produced by application onto the surface of a base material, has a film having a small film thickness, and achieves both high light permeability and excellent infrared reflective performance. The infrared reflective substrate includes: a transparent base material; and an infrared reflective layer formed by applying a coating agent containing a complex of poly(3,4-disubstituted thiophene) and a polyanion onto the transparent base material, and has a total light transmittance of 60% or higher. The complex preferably has a conductivity of 0.15 (S/cm) or higher, and the infrared reflective layer preferably has a film thickness of 0.50 μm or less.

EP 2 671 929 A1

## Description

### Technical Field

The present invention relates to a coating agent for forming a transparent film having infrared reflective performance, an infrared reflective film formed using the same, and an infrared reflective substrate including the film.

### Background Art

Infrared rays are electromagnetic waves with a wavelength longer than that of red light but shorter than that of millimeter-wavelength radio waves, and their wavelength falls in the range of about 0.7 μm to 1 mm. Infrared rays are divided into near-infrared rays, mid-infrared rays, and far-infrared rays according to their wavelengths. It is well known that the temperature of an object is increased by absorption of mid-infrared rays or far-infrared rays of long wavelength by the object.

Such properties of infrared rays are conventionally utilized. For example, an infrared reflective thin film is provided on the surface of an object to suppress the temperature rise of the object or to prevent the diffusion of heat through the object.

As such an infrared reflective thin film, a thin film made of a metal such as gold or silver is known. However, such a metal thin film is not transparent and is therefore disadvantageous in that it cannot be provided on the surface of a transparent base material such as a glass window.

As a transparent infrared reflective thin film, a transparent thin film made of a metal oxide such as tin-doped indium oxide (ITO) is used. However, such a transparent thin film is disadvantageous in that it is formed by sputtering or vacuum deposition and therefore expensive equipment and high temperature are required.

Therefore, the use of a conductive organic polymer material has been proposed as an infrared reflective material instead of the metal oxide (see Patent Documents 1 and 2).

In Patent Document 1, a transparent heat shield film using polyaniline as a conductive polymer constituting its heat shield layer is described, but its infrared reflectance is not specifically described. Heat shield films obtained in Examples each have a thick heat shield layer with a film thickness of 2 to 15 μm. Further, Patent Document 1 states that their maximum visible light transmittance is 68% that is relatively low.

Patent Document 2 states that a transparent optical functional layer using polythiophene as a conductive polymer has excellent reflection properties in the near-infrared region. However, according to Patent Document 2, the transparency of an in-situ polythiophene-based layer on a glass base material obtained in Example 1 is as low as 50%, and the conductivity of a layer made of polythiophene/polystyrenesulfonic acid obtained in Example 2 is as low as 0.1 S/cm and the conductivity of the polymer itself is not described. Further, the infrared reflectance of the layer obtained in Example 2 measured at a wavelength of 2000 nm is 16.2% that is relatively low. Layers formed in Examples 6 and 7 have a thickness of about 1 μm, from which it is estimated that their transparency is very low.

### PRIOR ART DOCUMENTS

### Patent Documents

Patent Document 1: JP-A-2005-288867
Patent Document 2: JP-A-2007-529094

### DISCLOSURE OF THE INVENTION

### Problems to be Solved by the Invention

The infrared reflective films according to the inventions disclosed in Patent Documents 1 and 2 cannot achieve a small film thickness, high transparency and excellent infrared reflective performance at the same time.

Under the circumstances, an object of the present invention is to provide a coating agent intended to be applied onto the surface of a base material to easily form a thin infrared reflective film having high light permeability and excellent infrared reflective performance, an infrared reflective film formed using the same, and an infrared reflective substrate including the film.

## Means for Solving the Problems

The present inventors have intensively studied, and as a result have found that the above object can be achieved by thinly applying a complex of poly(3,4-disubstituted thiophene) and a polyanion selected as a conductive polymer having a high conductivity, which has led to the completion of the present invention.

More specifically, the present invention provides a $\pi$-conjugated system conductive polymer-containing coating agent for forming an infrared reflective film and an infrared reflective film formed using the coating agent. The coating agent for forming an infrared reflective film preferably further contains a binder and/or an antioxidant.

The present invention also provides an infrared reflective substrate that includes: a transparent base material; and an infrared reflective layer formed by applying a coating agent containing a complex of poly(3,4-disubstituted thiophene) and a polyanion onto the transparent base material, and has a total light transmittance of 60% or higher.

The complex preferably has a conductivity of 0.15 (S/cm) or higher, and the infrared reflective layer preferably has a film thickness of 0.50 $\mu$m or less.

The total light transmittance of the infrared reflective substrate is preferably 70% or higher, more preferably 80% or higher.

The infrared reflective substrate preferably has an infrared reflectance of 15% or higher, more preferably 20% or higher, even more preferably 26% or higher, most preferably 30% or higher at a wavelength of 3000 nm as measured by 5° specular reflection using an aluminum-deposited plane mirror as a reference.

The coating agent preferably further contains a binder and/or an antioxidant.

## Effects of the Invention

According to the present invention, it is possible to provide an infrared reflective substrate that can be easily produced by application onto the surface of a base material and has both very high transparency and excellent infrared reflective performance. Further, the infrared reflective substrate according to the present invention is excellent also in the adhesion of the infrared reflective layer to the transparent base material.

## BRIEF DESCRIPTION OF THE DRAWINGS

Fig. 1 shows the infrared reflectance spectrum of a substrate obtained in Example 1.
Fig. 2 shows the infrared reflectance spectrum of a substrate obtained in Example 2.
Fig. 3 shows the infrared reflectance spectrum of a substrate obtained in Example 3.
Fig. 4 shows the infrared reflectance spectrum of a substrate obtained in Example 4.
Fig. 5 shows the infrared reflectance spectrum of a substrate obtained in Example 5.
Fig. 6 shows the infrared reflectance spectrum of a substrate obtained in Comparative Example 1.
Fig. 7 shows the infrared reflectance spectrum of a substrate obtained in Comparative Example 2.
Fig. 8 shows the infrared reflectance spectrum of a substrate obtained in Comparative Example 3.
Fig. 9 shows the infrared reflectance spectrum of a substrate obtained in Comparative Example 4.
Fig. 10 shows the infrared reflectance spectrum of a substrate obtained in Comparative Example 5.

## PREFERRED MODE FOR CARRYING OUT THE INVENTION

Hereinbelow, the present invention will be described in detail.

A coating agent for forming an infrared reflective film according to the present invention contains, as an essential component, a $\pi$-conjugated system conductive polymer.

The $\pi$-conjugated system conductive polymer used in the present invention is a polymer material that has a $\pi$-conjugated system structure and exhibits conductivity. Specific examples of such a $\pi$-conjugated system conductive polymer include polythiophene, polyaniline, polypyrrole, polyparaphenylene, polyparaphenylene vinylene, and derivatives thereof.

Among them, a polythiophene-based conductive polymer composed of a complex of polythiophene and a dopant is preferably used from the viewpoint of high infrared reflection properties and chemical stability. More specifically, the polythiophene-based conductive polymer is a complex of poly(3,4-disubstituted thiophene) and a dopant.

The poly(3,4-disubstituted thiophene) is preferably polythiophene that is in a cationic form and has a repeating structural unit represented by the following formula (1):

[Chemical formula 1]

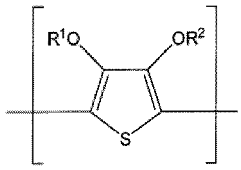

(1)

The polythiophene in a cationic form refers to polythiophene, part of which is in a cationic form due to abstraction of electrons therefrom for formation of a complex with a polyanion as a dopant.

In the formula (1), $R^1$ and $R^2$ are each independently a hydrogen atom or a $C_{1-4}$ alkyl group or $R^1$ and $R^2$ are linked together to represent a substituted or unsubstituted $C_{1-4}$ alkylene group so that a ring structure is formed. Examples of the $C_{1-4}$ alkyl group include a methyl group, an ethyl group, a propyl group, an isopropyl group, an n-butyl group, an isobutyl group, a sec-butyl group, and a t-butyl group. Examples of the substituted or unsubstituted $C_{1-4}$ alkylene group represented by $R^1$ and $R^2$ linked together to form a ring structure include a methylene group, a 1,2-ethylene group, a 1,3-propylene group, a 1,4-butylene group, a 1-methyl-1,2-ethylene group, a 1-ethyl-1,2-ethylene group, a 1-methyl-1,3-propylene group, and a 2-methyl-1,3-propylene group. The $C_{1-4}$ alkylene group can have, as a substituent group, a halogen group, a phenyl group, or the like. Preferred examples of the $C_{1-4}$ alkylene group include a methylene group, a 1,2-ethylene group, and a 1,3-propylene group. Among them, a 1,2-ethylene group is particularly preferred. The polythiophene having such an alkylene group is particularly preferably poly(3,4-ethylendioxythiophene).

The dopant constituting the polythiophene-based conductive polymer is preferably an anionic form polymer, that is, a polyanion that forms an ion pair with the above-described polythiophene to form a complex so that the polythiophene can be stably dispersed in water. Examples of such a dopant include carboxylic acid polymers (e.g., polyacrylic acid, polymaleic acid, polymethacrylic acid) and sulfonic acid polymers (e.g., polystyrenesulfonic acid, polyvinylsulfonic acid). These carboxylic acid polymers and sulfonic acid polymers may be copolymers of vinylcarboxylic acids or vinylsulfonic acids and other polymerizable monomers (e.g., acrylates, styrene). Among them, polystyrenesulfonic acid is particularly preferred.

The polystyrenesulfonic acid preferably has a weight average molecular weight larger than 20000 but 500000 or less. More preferably, the weight average molecular weight is 40000 to 200000. When polystyrenesulfonic acid having a molecular weight outside the above range is used, there is a case where the dispersion stability of the polythiophene-based conductive polymer in water is deteriorated. It is to be noted that the weight average molecular weight of the polymer is a value measured by gel permeation chromatography (GPC). In this measurement, an ultrahydrogel 500 column manufactured by Waters is used.

The polythiophene-based conductive polymer can be obtained by oxidation polymerization in water using an oxidizing agent. In the oxidation polymerization, two kinds of oxidizing agents (a first oxidizing agent and a second oxidizing agent) are used. Preferred examples of the first oxidizing agent include peroxodisulfuric acid, sodium peroxodisulfate, potassium peroxodisulfate, ammonium peroxodisulfate, hydrogen peroxide, potassium permanganate, potassium dichromate, perboric acid alkali salts, and copper salts. Among these first oxidizing agents, sodium peroxodisulfate, potassium peroxodisulfate, ammonium peroxodisulfate, and peroxodisulfuric acid are most preferred. The amount of the first oxidizing agent used is preferably 1.5 to 3.0 molar equivalents, more preferably 2.0 to 2.6 molar equivalents with respect to the thiophene-based monomer used.

As the second oxidizing agent, metal ions (e.g., iron ions, cobalt ions, nickel ions, molybdenum ions, vanadium ions) are preferably added in a catalytic amount. Among them, iron ions are most effective. The amount of metal ions added is preferably 0.005 to 0.1 molar equivalent, more preferably 0.01 to 0.05 molar equivalent with respect to the thiophene-based monomer used.

In this oxidation polymerization, water is used as a reaction solvent. In addition to water, a water-soluble solvent such as an alcohol (e.g., methanol, ethanol, 2-propanol, 1-propanol), acetone, or acetonitrile may be added. An aqueous dispersion of the conductive polymer is obtained by the above oxidation polymerization.

The $\pi$-conjugated system conductive polymer used in the present invention needs to have higher conductivity than a conductive polymer usually used for forming a conductive film to allow a resulting thin film to have excellent infrared reflection properties. More specifically, the $\pi$-conjugated system conductive polymer used needs to have a conductivity of 0.15 (S/cm) or higher. If the conductivity is less than 0.15 (S/cm), a thin film having excellent infrared reflection properties cannot be formed. The conductivity is preferably 0.20 (S/cm) or higher, more preferably 0.25 (S/cm) or higher, even more preferably 0.30 (S/cm) or higher. The $\pi$-conjugated system conductive polymer having a conductivity of 0.15 (S/cm) or higher can be easily produced by, for example, appropriately selecting polymerization conditions or its molecular weight. For example, such a $\pi$-conjugated system conductive polymer having high conductivity as described

above can be obtained by increasing its molecular weight. Particularly, when composed of a complex of poly(3,4-disubstituted thiophene) and a polyanion, the π-conjugated system conductive polymer can have high conductivity by optimizing the pH of a polymerization system during its production. The π-conjugated system conductive polymer having high conductivity is commercially available, and therefore may be a commercially-available product.

It is to be noted that in the present invention, the conductivity of a conductive polymer is calculated by the following formula from the measured film thickness and surface resistivity of a conductive layer formed using the conductive polymer on a base material:

$$\text{Conductivity (S/cm)} = 1/\{\text{Surface resistivity } (\Omega/\square) \times \text{Film thickness (cm)}\}$$

The coating agent according to the present invention preferably further contains, in addition to the π-conjugated system conductive polymer, a solvent and/or a dispersant. This makes it possible to reduce the viscosity of the coating agent to easily apply the coating agent onto a base material. The solvent or dispersant is not particularly limited as long as it can dissolve or disperse the π-conjugated system conductive polymer and another optional component.

When the coating agent is water-based, the solvent may be only water, but a solvent miscible in water may be used in combination with water. The solvent miscible in water is not particularly limited, and examples thereof include: alcohols such as methanol, ethanol, 2-propanol, and 1-propanol; glycol ether acetates such as ethylene glycol monoethyl ether acetate, diethylene glycol monoethyl ether acetate, and diethylene glycol monobutyl ether acetate; propylene glycols such as propylene glycol, dipropylene glycol, and tripropylene glycol; propylene glycol ethers such as propylene glycol monomethyl ether, propylene glycol monoethyl ether, dipropylene glycol monomethyl ether, dipropylene glycol monoethyl ether, propylene glycol dimethyl ether, dipropylene glycol dimethyl ether, propylene glycol diethyl ether, and dipropylene glycol diethyl ether; propylene glycol ether acetates such as propylene glycol monomethyl ether acetate, propylene glycol monoethyl ether acetate, dipropylene glycol monomethyl ether acetate, and dipropylene glycol monoethyl ether acetate; dimethylacetamide; acetone; acetonitrile; and mixtures of two or more of them.

When the coating agent is organic solvent-based, in addition to the above-mentioned solvents miscible in water, toluene, xylene, benzene, ethyl acetate, butyl acetate, methyl ethyl ketone, methyl isobutyl ketone, diethyl ether, diisopropyl ether, methyl-t-butyl ether, hexane, heptane, and the like can be used. Among the above-mentioned solvents and dispersants, methanol, ethanol, and 2-propanol are particularly preferred. It is to be noted that when all the components of the coating agent are completely dissolved, the term "solvent" is used, and when any one of the components of the coating agent is not dissolved but is dispersed, the term "dispersant" is used.

The solid matter concentration of the coating agent is not particularly limited as long as the coating agent is in the form of a homogeneous solution or a homogeneous dispersion liquid, but the coating agent preferably has a solid matter concentration of about 0.01 to 50 wt% when applied. The solid matter concentration of the coating agent is more preferably 1 to 20 wt%. When having a solid matter concentration within the above range, the coating agent can be easily applied. However, the coating agent may have a higher concentration at the point of sale or delivery. In this case, the coating agent may be diluted by adding a solvent and/or a dispersant before use, if necessary.

If necessary, the coating agent according to the present invention may further contain a binder, a conductivity-improving agent, a surfactant (a surface conditioner), a leveling agent, a defoaming agent, a rheology controlling agent, a tackifier, an antioxidant, a neutralizer, or the like.

Particularly, when a resin film is used as a base material, the binder is preferably used to form a uniform thin film and improve adhesion between the thin film and the base material.

The binder usable in the present invention is not particularly limited. A binder conventionally used to apply a conductive polymer onto a base material can be appropriately used. Specific examples of such a binder include: silane coupling agents such as alkoxysilanes, 3-glycidoxypropyltrimethoxysilane, polyether-modified polydimethylsiloxane, and polyether-modified siloxane; and resin binders such as polyester resins (e.g., polyethylene terephthalate, polytrimethylene terephthalate, polybutylene terephthalate, polyethylene naphthalate, polybutylene naphthalate), polyacrylate, polymethacrylate, polyurethane, polyvinyl acetate, polyvinylidene chloride, polyamide, polyimide, and copolymers obtained by copolymerization of monomers such as styrene, vinylidene chloride, vinyl chloride, alkyl acrylate, and alkyl methacrylate. These binders may be used singly or in combination of two or more of them. When a PET film is used as a base material, the binder used is preferably a polyester resin.

When the binder is added, the amount of the binder added is 0.1 to 500 parts by mass, preferably 20 to 200 parts by mass with respect to 100 parts by mass of the π-conjugated system conductive polymer. If the amount of the binder added is less than 20 parts by mass, the purpose of adding the binder, that is, sufficient adhesion to a base material cannot be achieved. If the amount of the binder added exceeds 200 parts by mass, the ratio of the binder becomes too high, which makes it impossible to achieve excellent infrared reflection properties.

The conductivity-improving agent is added for the purpose of improving the infrared reflection properties of a

thin film formed by applying the coating agent according to the present invention. The conductivity-improving agent is not particularly limited, and examples thereof include the following compounds:

ketone group-containing compounds such as isophorone, propylene carbonate, γ-butyrolactone, β-butyrolactone, and 1,3-dimethyl-2-imidazolidinone;
ether group-containing compounds such as diethylene glycol monomethyl ether, diethylene glycol monoethyl ether, diethylene glycol dimethyl ether, 2-phenoxy ethanol, dioxane, morpholine, 4-acryloylmorpholine, N-methylmorpholine N-oxide, 4-ethylmorpholine, oxetane, THF, and THP;
sulfinyl group-containing compounds such as dimethylsulfoxide;
amide group-containing compounds such as N,N-dimethylacetamide, N-methylformamide, N,N-dimethylformamide, acetamide, N-ethylacetamide, N-phenyl-N-propylacetamide, and benzamide;
carboxyl group-containing compounds such as acrylic acid, methacrylic acid, methanoic acid, ethanoic acid, propanoic acid, butanoic acid, pentanoic acid, hexanoic acid, octanoic acid, decanoic acid, dodecanoic acid, benzoic acid, p-toluic acid, p-toluic acid, p-chlorobezoic acid, p-nitrobenzoic acid, 1-naphthoic acid, 2-naphthoic acid, phthalic acid, isophthalic acid, oxalic acid, malonic acid, succinic acid, adipic acid, maleic acid, and fumaric acid;
compounds containing two or more hydroxyl groups, such as ethylene glycol, diethylene glycol, propylene glycol, trimethylene glycol, β-thiodiglycol, triethylene glycol, tripropylene glycol, 1,4-butanediol, 1,5-pentanediol, 1,3-butanediol, 1,6-hexanediol, neopentyl glycol, catechol, cyclohexanediol, cyclohexanedimethanol, glycerol, erythritol, glycerol, isomaltitol, lactitol, maltitol, mannitol, sorbitol, xylitol, and sucrose; and
lactam group-containing compounds such as N-methylpyrrolidone, β-lactam, γ-lactam, δ-lactam, ε-caprolactam, and laurolactam.

The amount of the conductivity-improving agent added to the coating agent according to the present invention is preferably 5 to 2000 parts by mass, more preferably 10 to 1500 parts by mass with respect to 100 parts by mass of the π-conjugated system conductive polymer. If the amount of the conductivity-improving agent added is less than 5 parts by mass, the addition of the conductivity-improving agent cannot have the effect of improving infrared reflection properties. If the amount of the conductivity-improving agent added exceeds 2000 parts by mass, the conductive component contained in the coating agent becomes diluted so that a resulting thin film cannot have sufficient infrared reflection properties.

The surfactant or the leveling agent is not particularly limited as long as it can improve leveling properties to obtain a uniform coating. Examples of such a surfactant or leveling agent include: siloxane compounds such as polyether-modified polydimethylsiloxane, polyether-modified siloxane, polyetherester-modified hydroxyl group-containing polydimethyl siloxane, polyether-modified acrylic group-containing polydimethyl siloxane, polyester-modified acrylic group-containing polydimethyl siloxane, perfluoropolydimethyl siloxane, perfluoropolyether-modified polydimethyl siloxane, and perfluoropolyester-modified polydimethyl siloxane; fluorine-containing organic compounds such as perfluoroalkyl carboxylic acid and perfluoroalkylpolyoxyethylene ethanol; polyether-based compounds such as polyoxyethylene alkyl phenyl ether, propyleneoxide polymers, and ethyleneoxide polymers; carboxylic acids such as coconut oil fatty acid amine salts and gum rosins; ester-based compounds such as castor oil sulfates, phosphates, alkyl ether sulfates, sorbitan fatty acid esters, sulfonates, phosphates, and succinates; sulfonate compounds such as alkyl aryl amine sulfonates and dioctyl sodium sulfosuccinate; phosphate compounds such as sodium lauryl phosphate; amide compounds such as coconut oil fatty acid ethanol amide; and acrylic copolymers. Among them, from the viewpoint of leveling properties, siloxane-based compounds and fluorine-containing compounds are preferred, and polyether-modified polydimethyl siloxane is particularly preferred. The amount of the surfactant or the leveling agent added to the coating agent according to the present invention is preferably 0.001 to 500 parts by mass, more preferably 0.01 to 100 parts by mass with respect to 100 parts by mass of the π-conjugated system conductive polymer.

Examples of the defoaming agent include compounds having a siloxane skeleton such as polyester-modified polymethylalkylsiloxanes, polyether-modified polymethylalkylsiloxanes, and aralkyl-modified polymethylalkylsiloxanes. The amount of the defoaming agent added to the coating agent according to the present invention is preferably 0.001 to 500 parts by mass, more preferably 0.01 to 100 parts by mass with respect to 100 parts by mass of the π-conjugated system conductive polymer.

Examples of the rheology-controlling agent include: cellulose-based ones and derivatives thereof; derivatives of proteins such as albumin and casein; alginic acid; agar; starch; polyssacharides; vinyl-based compounds; vinylidene compounds, polyester compounds, polyether compounds, polyglycol-based compounds, polyvinyl alcohol-based compounds; polyalkyleneoxide compounds; and polyacrylic acid-based compounds. The amount of the rheology-controlling agent added to the coating agent according to the present invention is preferably 0.001 to 500 parts by mass, more preferably 0.01 to 100 parts by mass with respect to 100 parts by mass of the π-conjugated system conductive polymer.

If necessary, a tackifier or the like can also be used for the coating agent according to the present invention. The amount of the tackifier added to the coating agent according to the present invention is preferably 0.001 to 500 parts by mass, more preferably 0.01 to 100 parts by mass with respect to 100 parts by mass of the π-conjugated system conductive polymer.

A thickener may be added for the purpose of increasing viscosity. Examples of such a thickener include water-soluble polymers such as alginic acid derivatives, xanthan gum derivatives, and saccharide compounds (e.g., carrageenan, cellulose). The amount of the thickener added to the coating agent according to the present invention is preferably 0.001 to 500 parts by mass, more preferably 0.01 to 100 parts by mass with respect to 100 parts by mass of the $\pi$-conjugated system conductive polymer.

The antioxidant is not particularly limited, and examples thereof include a reducing water-soluble antioxidant and a non-reducing water-soluble antioxidant. Examples of the reducing water-soluble antioxidant include: compounds having a lactone ring substituted with two hydroxyl groups, such as L-ascorbic acid, sodium L-ascorbate, potassium L-ascorbate, erythorbic acid, sodium erythorbate, and potassium erythorbate; monosaccharides and disaccharides such as maltose, lactose, cellobiose, xylose, arabinose, glucose, fructose, galactose, and mannose; flavonoids such as catechin, rutin, myricetin, quercetin, and kaempferol; compounds having two or more phenolic hydroxyl groups, such as curcumin, rosmarinic acid, chlorogenic acid, tannic acid, hydroquinone, and 3,4,5-trihydroxybenzoic acid; and thiol group-containing compounds such as cysteine, glutathione, and pentaerythritol tetrakis(3-mercaptobutylate). Examples of the non-reducing water-soluble antioxidant include compounds that absorb ultraviolet rays causing oxidation degradation, such as phenylimidazole sulfoic acid, phenyltriazole sulfonic acid, 2-hydroxypyrimidine, phenyl salicylate, and sodium 2-hydroxy-4-methoxybenzophenone-5-sulfonate. In the composition according to the present invention, a compound having a lactone ring substituted with two hydroxyl groups, a monosaccharide or a disaccharide, a flavonoid-based compound, or a compound having two or more phenolic hydroxyl groups is particularly preferably used. These antioxidants may be used singly or in combination of two or more of them. The amount of the antioxidant added to the coating agent according to the present invention is preferably 0.001 to 500 parts by mass, more preferably 1.0 to 80 parts by mass with respect to 100 parts by mass of the $\pi$-conjugated system conductive polymer. If the amount of the antioxidant is less than 1.0 part by mass, light resistance cannot be maintained. If the amount of the antioxidant exceeds 80 parts by mass, the ratio of the antioxidant becomes too high, which makes it impossible to achieve excellent infrared reflection properties.

The neutralizer is added when the coating agent is acidic for the purpose of neutralizing the coating agent. The neutralizer is not particularly limited as long as it is alkaline compound, but is preferably one evaporated by heating. Examples of such a neutralizer include ammonia water and methylamine. The amount of the neutralizer added can be appropriately determined depending on a desired final pH of the coating agent.

(Method for producing coating agent)

A method for producing the coating agent according to the present invention is not particularly limited. For example, the above-described components may be mixed and stirred with a stirrer such as a mechanical stirrer or a magnetic stirrer for about 1 to 60 minutes.

(Infrared reflective substrate)

An infrared reflective film can be formed by applying the coating agent according to the present invention onto a base material to be coated and then dried. The base material to be coated with the coating agent may be either transparent or opaque. A material constituting the base material is not particularly limited, and examples thereof include: organic materials such as polyolefin resins (e.g., polyethylene, polypropylene, ethylene-vinyl acetate copolymers, ethylene-acrylate copolymers, ionomer copolymers, and cycloolefin-based resins), polyester resins (e.g., polyethylene terephthalate, polybutylene terephthalate, polycarbonate, polyoxyethylene, modified polyphenylene, and polyphenylene sulfide), polyamide resins (e.g., nylon 6, nylon 6,6, nylon 9, semi-aromatic polyamide 6T6, semi-aromatic polyamide 6T66, and semi-aromatic polyamide 9T), acrylic resin, polystyrene, acrylonitrile styrene, acrylonitrile butadiene styrene, and vinyl chloride resin; and inorganic materials such as glass.

A method for applying the coating agent is not particularly limited, and may be appropriately selected from well-known methods. Examples of such a method include spin coating, gravure coating, bar coating, dip coating, curtain coating, die coating, and spray coating. Alternatively, a printing method may be applied, and examples thereof include screen printing, spray printing, inkjet printing, relief printing, intaglio printing, and lithography.

A coating made of the coating agent is dried using a drier such as a conventional circulation drier, hot drier, or infrared drier. The use of any one of such driers having heating means (e.g., a hot drier, an infrared drier) makes it possible to perform drying and heating at the same time. As the heating means other than the above drier, a heating/pressure roller or press machine having heating function may be used.

The conditions for drying the coating are not particularly limited. For example, the coating is dried at 25 to 200°C for about 10 seconds to 2 hours, preferably at 80 to 150°C for about 1 to 30 minutes.

The dry film thickness of the coating made of the coating agent according to the present invention can be appropriately selected depending on the intended use, but is usually 1 nm to 5 $\mu$m. However, the film thickness is

preferably small from the viewpoint of high transparency and cost reduction. From this point of view, the film thickness is preferably 0.50 μm or less, more preferably 0.40 μm or less, even more preferably 0.30 μm or less. In the present invention, a conductive polymer having a high conductivity is used, and therefore excellent infrared reflection properties can be achieved even if the coating has such a very small film thickness.

An infrared reflective substrate according to the present invention including a transparent base material and an infrared reflective layer formed on the surface of the transparent base material can be produced by applying the coating agent according to the present invention onto the surface of the transparent base material and drying the coating agent. The infrared reflective substrate according to the present invention can have a total light transmittance of 60% or higher because the coating agent according to the present invention contains, as a conductive polymer, a complex of poly(3,4-disubstituted thiophene) and a polyanion and the infrared reflective layer is formed as a thin film having very high transparency. The infrared reflective substrate preferably has a total light transmittance of 70% or higher, more preferably 80% or higher.

Such an infrared reflective substrate that uses an organic material and has both high transparency and excellent infrared reflection properties is previously unknown. The infrared reflective substrate according to the present invention can achieve an infrared reflectance of 15% or higher at a wavelength of 3000 nm as measured by 5° specular reflection using an aluminum-deposited plane mirror as a reference. The infrared reflectance is more preferably 20% or higher, even more preferably 26% or higher, most preferably 30% or higher. The infrared reflective substrate according to the present invention can have excellent reflection properties for any infrared rays such as near-infrared rays (about 300 to 3000 nm), mid-infrared rays (about 3000 to 30000 nm), or far-infrared rays (about 30000 to 300000 nm).

The infrared reflective substrate according to the present invention can be used for various purposes, and may be formed by, for example, applying the coating agent according to the present invention onto a resin film such as a PET film. The thus obtained infrared reflective transparent film can be used by attaching to the surface of a glass window (a single-glass window or a double-glass window), the wall surface of a building or vehicle, or the wall surface of a refrigerator or freezer. The infrared reflective substrate according to the present invention has very high transparency. Therefore, when used for a glass window, the infrared reflective substrate according to the present invention can exhibit excellent infrared reflection properties without affecting the transparency of the glass window. As a result, it is expected that the effect of preventing the release of heat from inside to outside of a room or the effect of preventing the transfer of heat from outside to inside of a room can be obtained while high transparency is enjoyed.

The coating agent according to the present invention can also be used by directly applying onto the surface of a glass window, the wall surface of a building or vehicle, or the wall surface of a refrigerator or freezer. Such an embodiment obtained by directly applying the coating agent according to the present invention is also within the scope of the infrared reflective substrate according to the present invention as long as the base material is transparent.

## Examples

Hereinbelow, the present invention will be described in more detail with reference to examples, but is not limited to these examples. In the following description, the term "part(s)" or "%" refers to "part(s) by weight" or "% by weight", respectively, unless otherwise specified.

<Measurement of conductivity of conductive polymer>

The conductivity of a conductive polymer used in each of the following examples and comparative examples was measured in the following manner. Each conductive polymer-containing aqueous dispersion was applied onto a base material by bar coating using a wire bar No. 8 (wet film thickness: 18 μm) and dried at 130°C for 15 minutes to form a thin film on the base material. The film thickness of the formed thin film was measured by a stylus profilometer. Then, the surface resistivity of the thin film was measured by Loresta GP (MCP-T600) manufactured by Mitsubishi Chemical Corporation. The measured film thickness and surface resistivity were substituted into the following formula to determine the conductivity of the conductive polymer.

$$\text{Conductivity (S/cm)} = 1/\{\text{Surface resistivity } (\Omega/\square) \times \text{Film thickness (cm)}\}$$

(Example 1) Example using sheet glass

50.0 g of an aqueous dispersion of a complex of poly(3,4-ethylenedioxythiophene) and polystyrenesulfonic acid (Clevios P manufactured by Heraeus, conductivity: 0.09 S/cm, solid content: 1.3%), 0.5 g of a surfactant (solid content: 10%), 0.05 g of a leveling agent (solid content: 100%), 2 g of water, and 8 g of ethanol were mixed and stirred

for 30 minutes. The thus obtained mixture was filtered through a 400-mesh SUS screen to prepare a coating agent.

The obtained coating agent was applied onto a 0.7 mm-thick blue sheet glass (AMT-8292 manufactured by Advanced Material Technology) by bar coating using a wire bar No. 8 (wet film thickness: 18 μm) and dried at 100°C for 1 minute to obtain a substrate.

(Example 2) Example using sheet glass

A substrate was obtained in the same manner as in Example 1 except that Clevios P used in Example 1 was changed to Clevios P HC V4 (manufactured by Heraeus, conductivity: 0.23 S/cm, solid content: 1.2%) that is also an aqueous dispersion of a complex of poly(3,4-ethylenedioxythiophene) and polystyrenesulfonic acid.

(Example 3) Example using sheet glass

A substrate was obtained in the same manner as in Example 1 except that Clevios P used in Example 1 was changed to Clevios PH1000 (manufactured by Heraeus, conductivity: 0.46 S/cm, solid content: 1.1%) that is also an aqueous dispersion of a complex of poly(3,4-ethylenedioxythiophene) and polystyrenesulfonic acid.

(Example 4) Example using PET film

50.0 g of an aqueous dispersion of a complex of poly(3,4-ethylenedioxythiophene) and polystyrenesulfonic acid (Clevios PH1000 manufactured by Heraeus, conductivity: 0.46 S/cm, solid content: 1.1 mass%), 0.53 g of a polyester resin aqueous dispersion (Gabusen ES-210 manufactured by Nagase Chemtex Corporation, solid content: 25.0 mass%), 2.28 g of dimethylsulfoxide (manufactured by Tokyo Chemical Industry Co., Ltd., purity: > 99.0%), 1.0 g of a surfactant (solid content: 10%), 0.05 g of a leveling agent (solid content: 100%), and 1.25 g of water were mixed and stirred for 30 minutes. The thus obtained mixture was filtered through a 400-mesh SUS screen to prepare a coating agent.

The obtained coating agent was applied onto a 188 μm-thick PET film (Lumirror T60 manufactured by Toray Industries, Inc.) by bar coating using a wire bar No. 8 (wet film thickness: 18 μm) and dried at 100°C for 1 minute to obtain a substrate.

(Example 5) Example using PET film

A substrate was obtained in the same manner as in Example 3 except that the wire bar No. 8 (wet film thickness: 18 μm) used in Example 4 was changed to a wire bar No. 16 (wet film thickness: 36 μm).

(Example 6) Example using PET film

50.0 g of an aqueous dispersion of a complex of poly(3,4-ethylenedioxythiophene) and polystyrenesulfonic acid (Clevios PH1000 manufactured by Heraeus, conductivity: 0.46 S/cm, solid content: 1.1 mass%), 0.53 g of a polyester resin aqueous dispersion (Gabusen ES-210 manufactured by Nagase Chemtex Corporation, solid content: 25.0 mass%), 0.11 g of catechin (manufactured by Tokyo Chemical Industry Co., Ltd., purity: > 95.0%), 1.0 g of a surfactant (solid content: 10%), 0.05 g of a leveling agent (solid content: 100%), and 1.25 g of water were mixed and stirred for 30 minutes. The thus obtained mixture was filtered through a 400-mesh SUS screen to prepare a coating agent.

The obtained coating agent was applied onto a 188 μm-thick PET film (Lumirror T60 manufactured by Toray Industries, Inc.) by bar coating using a wire bar No. 16 (wet film thickness: 36 μm) and dried at 100°C for 1 minute to obtain a substrate.

(Example 7) Example using PET film

50.0 g of an aqueous dispersion of a complex of poly(3,4-ethylenedioxythiophene) and polystyrenesulfonic acid (Clevios PH1000 manufactured by Heraeus, conductivity: 0.46 S/cm, solid content: 1.1 mass%), 0.53 g of a polyester resin aqueous dispersion (Gabusen ES-210 manufactured by Nagase Chemtex Corporation, solid content: 25.0 mass%), 0.11 g of D-(+)-cellobiose (manufactured by Tokyo Chemical Industry Co., Ltd.), 1.0 g of a surfactant (solid content: 10%), 0.05 g of a leveling agent (solid content: 100%), and 1.25 g of water were mixed and stirred for 30 minutes. The thus obtained mixture was filtered through a 400-mesh SUS screen to prepare a coating agent.

The obtained coating agent was applied onto a 188 μm-thick PET film (Lumirror T60 manufactured by Toray Industries, Inc.) by bar coating using a wire bar No. 16 (wet film thickness: 36 μm) and dried at 100°C for 1 minute to obtain a substrate.

(Example 8) Example using PET film

50.0 g of an aqueous dispersion of a complex of poly(3,4-ethylenedioxythiophene) and polystyrenesulfonic acid (Clevios PH1000 manufactured by Heraeus, conductivity: 0.46 S/cm, solid content: 1.1 mass%), 0.53 g of a polyester resin aqueous dispersion (Gabusen ES-210 manufactured by Nagase Chemtex Corporation, solid content: 25.0 mass%), 0.11 g of L-ascorbic acid (manufactured by Wako Pure Chemical Industries, Ltd.), 1.0 g of a surfactant (solid content: 10%), 0.05 g of a leveling agent (solid content: 100%), and 1.25 g of water were mixed and stirred for 30 minutes. The thus obtained mixture was filtered through a 400-mesh SUS screen to prepare a coating agent.

The obtained coating agent was applied onto a 188 μm-thick PET film (Lumirror T60 manufactured by Toray Industries, Inc.) by bar coating using a wire bar No. 16 (wet film thickness: 36 μm) and dried at 100°C for 1 minute to obtain a substrate.

(Example 9) Example using PET film

50.0 g of an aqueous dispersion of a complex of poly(3,4-ethylenedioxythiophene) and polystyrenesulfonic acid (Clevios PH1000 manufactured by Heraeus, conductivity: 0.46 S/cm, solid content: 1.1 mass%), 0.53 g of a polyester resin aqueous dispersion (Gabusen ES-210 manufactured by Nagase Chemtex Corporation, solid content: 25.0 mass%), 0.11 g of hydroquinone (manufactured by Tokyo Chemical Industry Co., Ltd.), 1.0 g of a surfactant (solid content: 10%), 0.05 g of a leveling agent (solid content: 100%), and 1.25 g of water were mixed and stirred for 30 minutes. The thus obtained mixture was filtered through a 400-mesh SUS screen to prepare a coating agent.

The obtained coating agent was applied onto a 188 μm-thick PET film (Lumirror T60 manufactured by Toray Industries, Inc.) by bar coating using a wire bar No. 16 (wet film thickness: 36 μm) and dried at 100°C for 1 minute to obtain a substrate.

(Example 10) Example using PET film

A coating agent was prepared in the same manner as in Example 4 except that the amount of the polyester resin aqueous dispersion (Gabusen ES-210 manufactured by Nagase Chemtex Corporation, solid content: 25.0 mass%) was changed to 0.44 g.

The obtained coating agent was applied onto a 188 μm-thick PET film (Lumirror T60 manufactured by Toray Industries, Inc.) by bar coating using a wire bar No. 16 (wet film thickness: 36 μm) and dried at 100°C for 1 minute to obtain a substrate.

(Example 11) Example using PET film

A coating agent was prepared in the same manner as in Example 4 except that the amount of the polyester resin aqueous dispersion (Gabusen ES-210 manufactured by Nagase Chemtex Corporation, solid content: 25.0 mass%) was changed to 4.4 g.

The obtained coating agent was applied onto a 188 μm-thick PET film (Lumirror T60 manufactured by Toray Industries, Inc.) by bar coating using a wire bar No. 8 (wet film thickness: 18 μm) and dried at 100°C for 1 minute to obtain a substrate.

(Example 12) Example using PET film

A coating agent was prepared in the same manner as in Example 8 except that the amount of L-ascorbic acid (manufactured by Wako Pure Chemical Industries, Ltd.) was changed to 0.0070 g.

The obtained coating agent was applied onto a 188 μm-thick PET film (Lumirror T60 manufactured by Toray Industries, Inc.) by bar coating using a wire bar No. 16 (wet film thickness: 36 μm) and dried at 100°C for 1 minute to obtain a substrate.

(Example 13) Example using PET film

A coating agent was prepared in the same manner as in Example 8 except that the amount of L-ascorbic acid (manufactured by Wako Pure Chemical Industries, Ltd.) was changed to 0.44 g.

The obtained coating agent was applied onto a 188 μm-thick PET film (Lumirror T60 manufactured by Toray Industries, Inc.) by bar coating using a wire bar No. 16 (wet film thickness: 36 μm) and dried at 100°C for 1 minute to obtain a substrate.

(Example 14) Example using PET film

A coating agent was prepared in the same manner as in Example 4 except that 0.373 g of an acrylic resin-based aqueous dispersion (NIKASOL RX-7018 manufactured by Nippon Carbide Industries Co., Inc., solid content: 35.5 mass%) was used instead of the polyester resin aqueous dispersion.

The obtained coating agent was applied onto a 188 μm-thick PET film (Lumirror T60 manufactured by Toray Industries, Inc.) by bar coating using a wire bar No. 8 (wet film thickness: 18 μm) and dried at 100°C for 1 minute to obtain a substrate.

(Example 15) Example using PET film

A coating agent was prepared in the same manner as in Example 4 except that 0.379 g of an urethane resin-based aqueous dispersion (HYDRAN WLS-213 manufactured by DIC Corporation, solid content: 35.0 mass%) was used instead of the polyester resin aqueous dispersion.

The obtained coating agent was applied onto a 188 μm-thick PET film (Lumirror T60 manufactured by Toray Industries, Inc.) by bar coating using a wire bar No. 8 (wet film thickness: 18 μm) and dried at 100°C for 1 minute to obtain a substrate.

(Example 16) Example using PET film

A coating agent was prepared in the same manner as in Example 4 except that 0.133 g of PEG400 diacrylate (EBECRYL 11 manufactured by DAICEL-CYTEC Co., Ltd., solid content: 100 mass%) was used instead of the polyester resin aqueous dispersion.

The obtained coating agent was applied onto a 188 μm-thick PET film (Lumirror T60 manufactured by Toray Industries, Inc.) by bar coating using a wire bar No. 8 (wet film thickness: 18 μm) and dried at 100°C for 1 minute to obtain a substrate.

(Example 17) Example using PET film

A coating agent was prepared in the same manner as in Example 4 except that 0.133 g of urethane acrylate (U-4HA manufactured by Shin-Nakamura Chemical Co., Ltd., solid content: 100 mass%) was used instead of the polyester resin aqueous dispersion.

The obtained coating agent was applied onto a 188 μm-thick PET film (Lumirror T60 manufactured by Toray Industries, Inc.) by bar coating using a wire bar No. 8 (wet film thickness: 18 μm) and dried at 100°C for 1 minute to obtain a substrate.

(Comparative Example 1)

A 0.7 mm-thick blue sheet glass (AMT-8292 manufactured by Advanced Material Technology) was prepared as a substrate and directly subjected to measurements.

(Comparative Example 2)

A tin oxide coating agent (tin oxide sol manufactured by Kisan Kinzoku Chemicals Co., Ltd.) was applied onto a 0.7 mm-thick blue sheet glass (AMT-8292 manufactured by Advanced Material Technology) by bar coating using a wire bar No. 8 (wet film thickness: 12 μm) and dried at 100°C for 1 minute to obtain a substrate.

(Comparative Example 3)

A substrate was obtained in the same manner as in Comparative Example 2 except that the tin oxide coating agent used in Comparative Example 2 was changed to a titanium oxide coating agent for photocatalyst (STS-01 manufactured by Ishihara Sangyo Kaisha Ltd.).

(Comparative Example 4)

1.0 g of 3,4-ethylenedioxythiophene (Clevios M manufactured by Heraeus), 20 g of a 40% solution of paratoluenesulfonic acid in butanol (Clevios CB40 manufactured by Heraeus), and 1.25 g of dimethylsulfoxide were mixed and stirred for 30 minutes.

The thus obtained coating agent was applied onto a 0.7 mm-thick blue sheet glass (AMT-8292 manufactured by Advanced Material Technology) by bar coating using a wire bar No. 16 (wet film thickness: 24 μm) and dried at 100°C for 10 minutes. The thus obtained thin film was sufficiently rinsed with distilled water to remove an iron salt to obtain a substrate.

(Comparative Example 5)

A 188 μm-thick PET film (Lumirror T60 manufactured by Toray Industries, Inc.) was prepared as a substrate and directly subjected to measurements.

Various evaluations were performed on the substrates obtained in Examples and Comparative Examples based on the following methods.

(1) Total light transmittance and haze value

The total light transmittance and haze value of each of the substrates were measured in accordance with JIS K7150 using a haze computer HGM-2B (manufactured by Suga Test Instruments Co., Ltd.).

(2) Film thickness

The film thickness of the thin film formed on the surface of the substrate was measured using a stylus profilometer Dektak6M (manufactured by ULVAC, Inc.).

(3) Infrared reflectance spectrum

The infrared reflectance spectrum of each of the substrates was measured in the wavelength range of 300 to 3300 nm including the infrared wavelength range with the use of a Hitachi spectrophotometer U-4100 equipped with a 5° specular reflectance accessary (relative) (manufactured by Hitachi, Ltd.) and an aluminum-deposited plane mirror as a reference. Each of the percentages shown in Table 1 and the drawings represents the ratio of the intensity of reflected light from the thin film surface of the substrate to be measured to the intensity of reflected light from the aluminum-deposited plane mirror, and the percentage closer to 100% means higher reflection properties.

(4) Reflectance at wavelengths of 30,000 to 300,000 nm

The far-infrared reflectance of the thin film surface of each of the substrates to be measured was measured in the wavelength range of 30,000 to 300,000 nm using D and S AERD (manufactured by DEVICES & SERVICES COMPANY).

(5) Adhesion

The adhesion of the thin film to the base material was determined in accordance with JIS 5400 in the following manner. An adhesive cellophane tape was attached to the thin film formed on the surface of the substrate, allowed to stand for 1 minute, and peeled off. Then, the thin film, from which the tape was peeled off, was visually observed to evaluate the degree of detachment of the thin film according to the following criteria:

A: score was 8 to 10; and
B: score was 0 to 6.

(6) Amount of change in reflectance after irradiation with UV rays

The far-infrared reflectance of each of the substrates was measured in the wavelength range of 30,000 to 300,000 nm using D and S AERD (DEVICES & SERVICES COMPANY) before and after the coating layer of the substrate was irradiated with UV rays at 4500 mJ/cm$^2$ using Unicure System (manufactured by Ushio Inc., metal halide lamp output: 1.5 kW). The amount of change was calculated from the measured reflectances using the following formula 1):

(Reflectance after test) - (Reflectance before test) • • • • 1)

The amount of change in reflectance after irradiation with UV rays was calculated using the formula 1).

The amount of change in reflectance after irradiation with UV rays was calculated using the formula 1).

The total light transmittance, haze value, film thickness, infrared reflectance at a wavelength of 3000 nm, infrared reflectance in the wavelength range of 30,000 to 300,000 nm, the result of the adhesion test, and the result of the light resistance test of each of the substrates are shown in Table 1. Figs. 1 to 10 show the infrared reflectance spectra of the substrates obtained in Examples 1 to 5 and Comparative Examples 1 to 5 measured in the wavelength range of 300 to 3300 nm.

[Table 1]

| | Total light transmittance (%) | Haze value (%) | Film thickness (μm) | Reflectance at wavelength of 3,000 nm (%) | Reflectance at wavelength of 30,000 - 300,000 nm (%) | Adhesion | Amount of change in reflectance after irradiation with UV rays (%) |
|---|---|---|---|---|---|---|---|
| Example 1 | 79.3 | 1.1 | 0.18 | 25.3 | 41 | A | 5 |
| Example 2 | 78.9 | 1.0 | 0.20 | 37.3 | 53 | A | 5 |
| Example 3 | 80.2 | 0.9 | 0.19 | 41.7 | 51 | A | 5 |
| Example 4 | 81.2 | 3.2 | 0.15 | 30.3 | 52 | A | 5 |
| Example 5 | 74.5 | 0.6 | 0.36 | 45.6 | 60 | A | 5 |
| Example 6 | 73.5 | 0.5 | 0.34 | 44.3 | 59 | A | 0 |
| Example 7 | 74.6 | 0.8 | 0.37 | 43.5 | 58 | A | 0 |
| Example 8 | 73.6 | 0.4 | 0.35 | 44.1 | 58 | A | 0 |
| Example 9 | 72.9 | 0.7 | 0.38 | 44.5 | 59 | A | 0 |
| Example 10 | 75.5 | 1.0 | 0.16 | 50.3 | 65 | A | 5 |
| Example 11 | 86.5 | 0.9 | 0.15 | 40.4 | 48 | A | 5 |
| Example 12 | 82.0 | 0.8 | 0.16 | 31.0 | 51 | A | 0 |
| Example 13 | 84.3 | 0.8 | 0.15 | 44.2 | 52 | A | 0 |
| Example 14 | 81.0 | 0.8 | 0.15 | 41.0 | 53 | A | 5 |
| Example 15 | 82.0 | 0.7 | 0.15 | 40.5 | 55 | A | 5 |
| Example 16 | 83.5 | 0.9 | 0.15 | 42.3 | 56 | A | 5 |
| Example 17 | 81.5 | 0.8 | 0.15 | 44.4 | 54 | A | 5 |
| Comparative Example 1 | 91.7 | 0.3 | - | 7.1 | 12 | B | 0 |
| Comparative Example 2 | 89.2 | 0.3 | 0.50 | 9.4 | 11 | B | 0 |
| Comparative Example 3 | 81.2 | 18.2 | 5.99 | 2.9 | 9 | B | 0 |
| Comparative Example 4 | 42.7 | 31.8 | 0.68 | 25.0 | 12 | B | 0 |
| Comparative Example 5 | 87.7 | 2.6 | - | 5.0 | 12 | - | 0 |

As can be seen from the results shown in Table 1 and the drawings, each of the substrates obtained in Examples 1 to 17 has a thin film having a small film thickness and achieves excellent infrared reflection properties while maintaining a high total light transmittance. Particularly, the complex of poly(3,4-disubstituted thiophene) and a polyanion used in

Examples 2 to 17 has a high conductivity, and therefore the substrates obtained in Examples 2 to 17 are superior in infrared reflection properties. Further, it is apparent that the substrates obtained in Examples 1 to 17 are excellent also in the adhesion of the thin film to the base material. Further, it is also apparent that the substrates obtained in Examples 6 to 9, 12 and 13 containing an antioxidant have sufficient light resistance.

On the other hand, the substrates obtained in Comparative Examples 1 to 3 and 5 do not have sufficient infrared reflection properties. The substrate obtained in Comparative Example 4 has a certain level of infrared reflection properties, but its total light transmittance is very low because the conductive polymer used is not a complex of poly(3,4-disubstituted thiophene) and a polyanion. Further, the substrates obtained in Comparative Examples 2 to 4 are poor in the adhesion of the thin film to the base material.

## Claims

1. A coating agent for forming an infrared reflective film, comprising a $\pi$-conjugated system conductive polymer.

2. The coating agent for forming an infrared reflective film, further comprising a binder and/or an antioxidant.

3. An infrared reflective film formed using the coating agent according to claim 1 or 2.

4. An infrared reflective substrate comprising:

   a transparent base material; and
   an infrared reflective layer formed by applying a coating agent containing a complex of poly(3,4-disubstituted thiophene) and a polyanion onto the transparent base material, the infrared reflective substrate having a total light transmittance of 60% or higher.

5. The infrared reflective substrate according to claim 4, wherein the polyanion is polystyrenesulfonic acid.

6. The infrared reflective substrate according to claim 4 or 5, wherein the complex has a conductivity of 0.15 (S/cm) or higher.

7. The infrared reflective substrate according to any one of claims 4 to 6, wherein the infrared reflective layer has a film thickness of 0.50 $\mu$m or less.

8. The infrared reflective substrate according to any one of claims 4 to 7, which has a total light transmittance of 70% or higher.

9. The infrared reflective substrate according to any one of claims 4 to 8, which has a reflectance of 15% or higher at a wavelength of 3000 nm as measured by 5° specular reflection using an aluminum-deposited plane mirror as a reference.

10. The infrared reflective substrate according to any one of claims 4 to 9, wherein the coating agent further contains a binder and/or an antioxidant.

Fig. 1

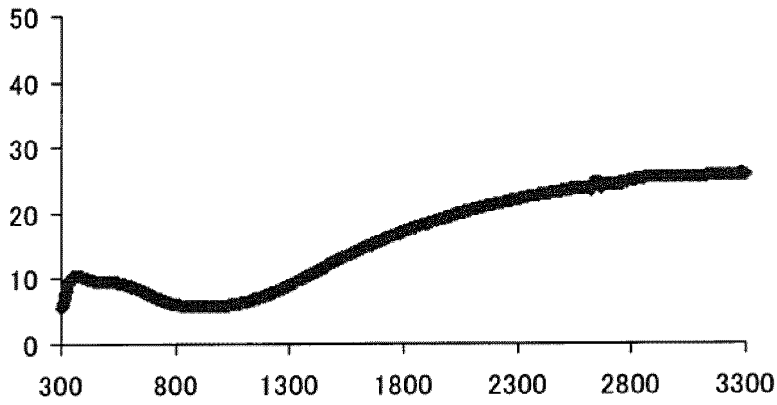


Fig. 2

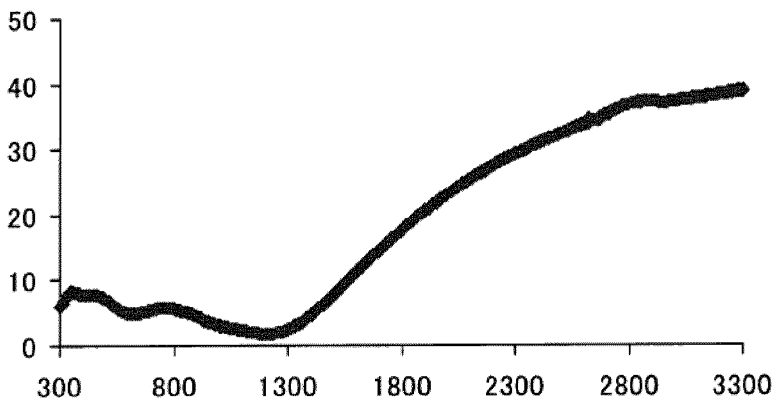


Fig. 3

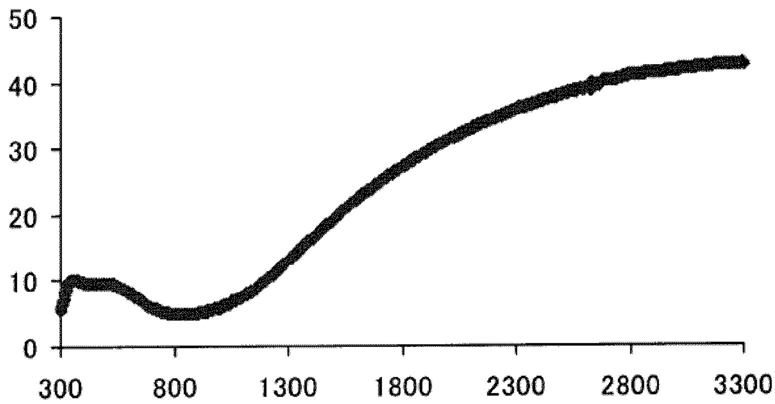

Fig. 4

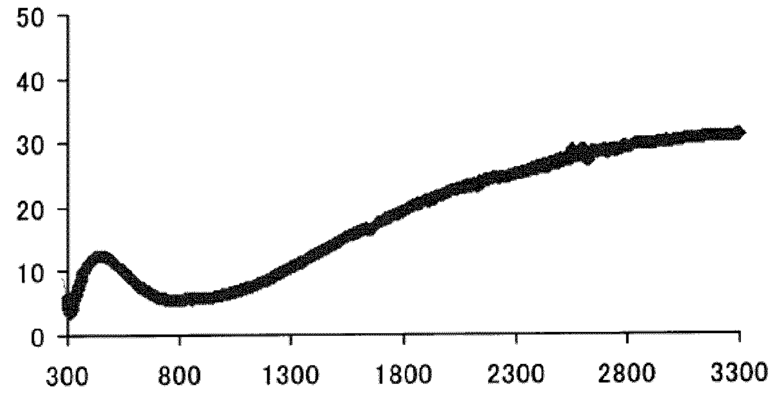


Fig. 5

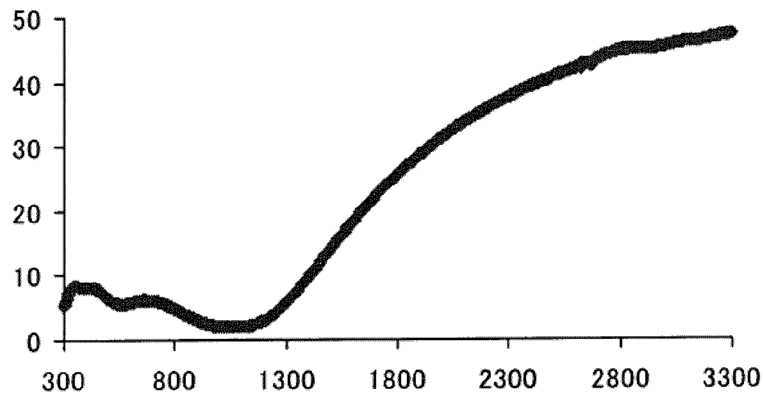


Fig. 6

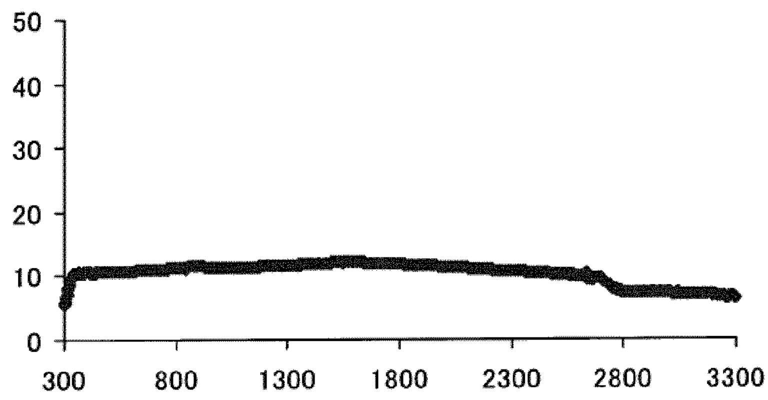

Fig. 7

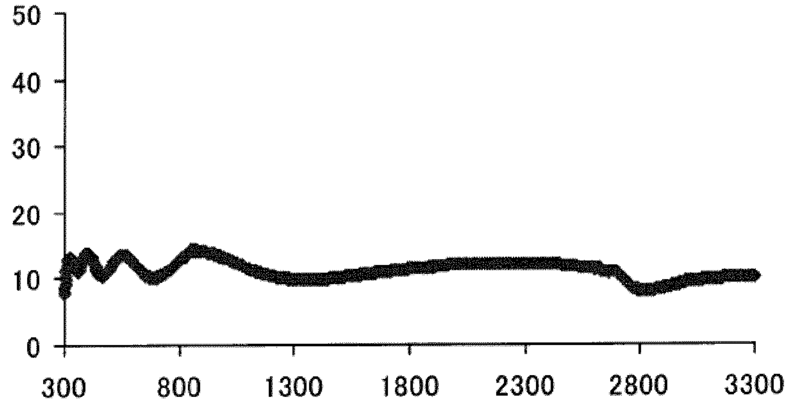


Fig. 8

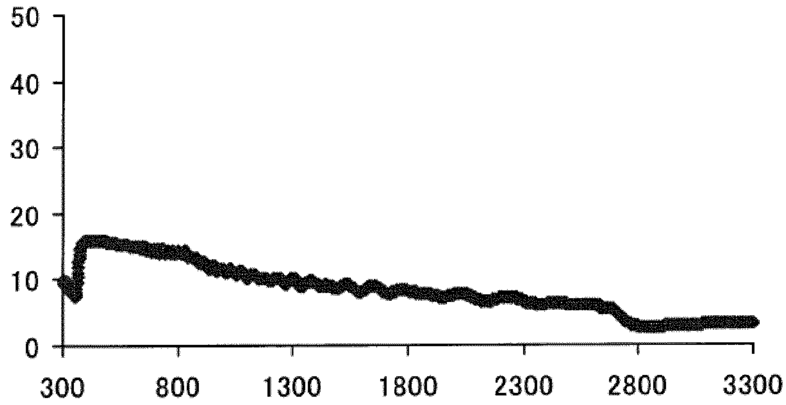


Fig. 9

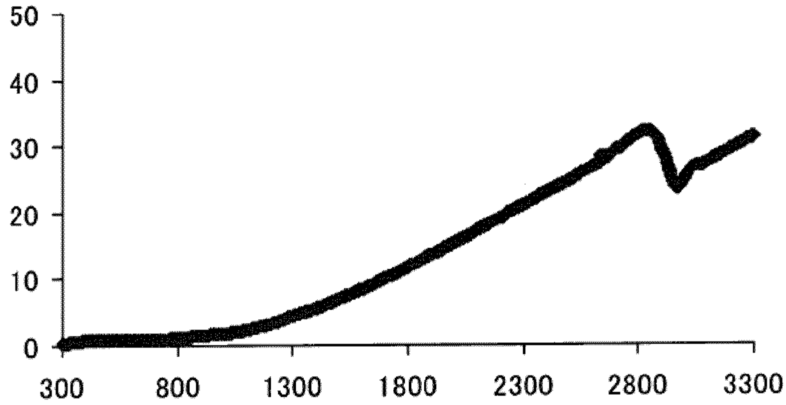

Fig. 10

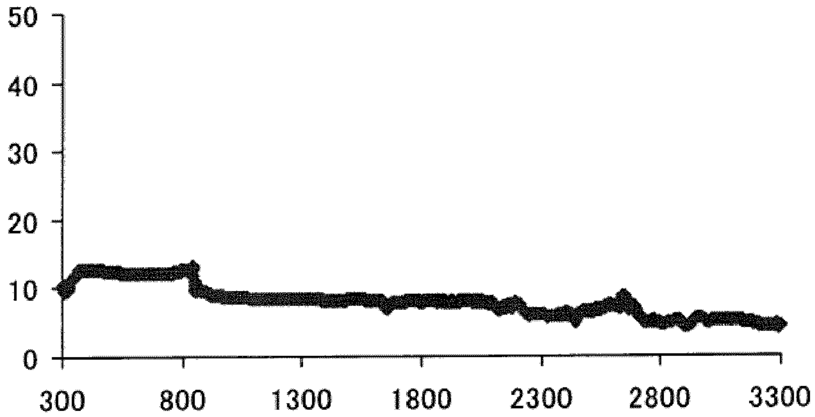

**INTERNATIONAL SEARCH REPORT**

International application No.
PCT/JP2012/000557

A. CLASSIFICATION OF SUBJECT MATTER
*C09D201/02*(2006.01)i, *B32B27/00*(2006.01)i, *C09D5/33*(2006.01)i, *C09D7/12*(2006.01)i, *C09D181/00*(2006.01)i

According to International Patent Classification (IPC) or to both national classification and IPC

B. FIELDS SEARCHED

Minimum documentation searched (classification system followed by classification symbols)
C09D201/02, B32B27/00, C09D5/33, C09D7/12, C09D181/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-529094 A (Bayer Beteiligungsverwaltung Goslar GmbH),<br>18 October 2007 (18.10.2007),<br>example 2<br>& US 2005/0202251 A1 & EP 1727847 A1<br>& WO 2005/087836 A1 | 1,3-9<br>1-10 |
| Y | JP 2002-060736 A (Nagase Chemtex Corp.),<br>26 February 2002 (26.02.2002),<br>claim 1; examples<br>(Family: none) | 1-10 |
| A | JP 02-068369 A (Sand AG.),<br>07 March 1990 (07.03.1990),<br>claims 1, 13 to 16<br>(Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 April, 2012 (25.04.12) | 15 May, 2012 (15.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/000557

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-101937 A (Agfa-Gevaert N.V.), 13 April 2001 (13.04.2001), paragraph [0026] & US 6444400 B1 & EP 1079397 A1 | 1-10 |
| A | JP 2006-127928 A (Mitsubishi Chemical Corp.), 18 May 2006 (18.05.2006), paragraph [0021] (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005288867 A
- JP 2007529094 A